# EUROPEAN PATENT APPLICATION

(11) **EP 4 583 255 A1**
(43) Date of publication of application: **09.07.2025**
(21) Application number: 23860469.8
(22) Date of filing: 31.08.2023
(51) Int. Cl.: H01M 10/658, H01M 10/613, H01M 10/625, H01M 10/651, H01M 10/6555

(54) **PARTITION MEMBER, BATTERY PACK AND METHOD FOR PRODUCING SAME**

(30) Priority: 31.08.2022 JP 2022137624
(71) Applicant: Mitsubishi Chemical Corporation, Tokyo 100-8251 (JP)
(72) Inventor: NINOMIYA, Naoya, Tokyo 100-8251 (JP); HASHIMOTO, Kei, Tokyo 100-8251 (JP); KAWAI, Tomohiro, Tokyo 100-8251 (JP); KOBAYASHI, Ryohei, Tokyo 100-8251 (JP)
(74) Representative: Vossius & Partner Patentanwälte Rechtsanwälte mbB
(86) International application number: PCT/JP2023/031722
(87) International publication number: WO 2024/048707

(57) **Abstract**

When a battery assembly is assembled by accommodating a plurality of single cells and a partitioning member that partitions the single cells in a housing, the partitioning member is bonded to an appropriate position on a surface of each single cell such that both members can be stacked and arranged, and a position of the stacked arrangement can be easily corrected.

The partitioning member for partitioning each of the plurality of single cells that are stacked, arranged, and accommodated in the battery assembly is provided, on a surface of the partitioning member, with a contact portion, preferably a contact portion formed of a layer containing a water-soluble resin, and the partitioning member is configured to be attachable to and detachable from the surface of the single cell via the contact portion.

## Description

### Technical Field

The present invention relates to a partitioning member that is accommodated in a battery assembly together with a plurality of single cells to partition the single cells, and a battery assembly.

### Background Art

In recent years, use of a secondary battery as a power source of a vehicle or the like has been rapidly increasing, for the purpose of improving a degree of freedom when the secondary battery is mounted in a limited space in the vehicle or the like and for the purpose of increasing a cruising distance per charge, studies for increasing an energy density of the secondary battery have been conducted.

Since a secondary battery used for a power source of a vehicle is generally used as a battery assembly including a plurality of single cells (battery cells), when one of the single cells constituting the battery assembly is damaged and generates heat, the heat generated therefrom may damage adjacent single cells, and the damage may spread to the entire battery assembly in a chain reaction. In order to prevent such a chain of damage between the single cells, a partitioning member for cooling the damaged single cell and blocking heat conduction to the adjacent single cells is provided between one single cell and another single cell.

Assembly of a secondary battery for a vehicle requiring high output and large capacity is performed by forming a module including a single cell group in which a large number of single cells are stacked and arranged at a high density and incorporating the module into a housing of a battery assembly in a state in which a restraining force is applied thereto. In the process of incorporating the module into the housing, positions of the stacked and arranged single cells and the partitioning member are likely to be misaligned, and thus this operation step may require time and effort.

As a measure for preventing the positional misalignment between the stacked and arranged single cells and the partitioning member, there is known a technique of integrally fixing a partitioning member made of an insulating sheet having a heat insulating property to surfaces of single cells on both sides sandwiching the partitioning member with a double-sided adhesive tape (for example, see PTL 1).

There is also known a technique for preventing positional displacement of single cells by winding a wrap film around stacked and arranged single cells to bundle a single cell group (for example, see PTL 2).

### Citation List

### Patent Literature

PTL 1: JP2021-61087A
PTL 2: JP2022-523953A

### Summary of Invention

### Technical Problem

As described above, the module including the single cell group is formed by stacking and arranging the large number of single cells and the partitioning member, and is assembled by an operation of arranging the single cells and the partitioning member sequentially in a row. It is necessary to rearrange the single cell and the partitioning member in an appropriate arrangement when positional misalignment therebetween is found in the step of the arranging operation, and when positional misalignment occurs when the module is assembled into the housing, it is also necessary to rearrange the single cell and the partitioning member with positional misalignment in the single cell group into an appropriate arrangement.

When the single cell and the partitioning member are bonded together with the double-sided adhesive tape, the two members are fixed into a single part via the double-sided adhesive tape, and when the two members with positional misalignment during the step of arranging the single cell and partitioning member in a row are erroneously bonded together, an operation for correcting the positional misalignment is extremely troublesome. That is, since adhesive strength of the double-sided adhesive tape is large, attachment cannot be repeated, and it is necessary to peel off the single cell and the partitioning member that are bonded together and attach the double-sided adhesive tape again to arrange and bond the two members together in an appropriate arrangement. When the single cell and the partitioning member are peeled off, the single cell or the partitioning member may deform. When the double-sided adhesive tape is used, it is not possible to easily correct a stacked position between the single cell and the partitioning member.

In each of the case where the double-sided adhesive tape is attached to the single cell and the partitioning member to form the module and the case where the wrap film is wound around the stacked and arranged single cell group to form the module, a plastic material is used and thus it is necessary to separate the double-sided adhesive tape or the wrap film when the battery assembly is disassembled due to disposal of the secondary battery from the perspective of a requirement of life cycle assessment (LCA), which increases disposal cost.

The present invention has been made in view of such a problem in the related art, and an object thereof is to bond a partitioning member to an appropriate position on a surface of each single cell such that both members can be stacked and arranged, and to make it difficult for a stacked position to be misaligned while making it possible to easily correct a misaligned position in a case where a battery assembly is assembled by accommodating a plurality of single cells and a partitioning member that partitions the single cells in a housing.

### Solution to Problem

In order to solve the above problem, the present invention includes the following aspects.
(1) A partitioning member, in which
   a surface of the partitioning member is covered with a casing, and the casing includes, on a surface thereof, a contact portion to be in contact with the single cell, and
   the contact portion is switchable to an ON state in which adhesion appears and an OFF state in which the adhesion does not appear.
(2) A partitioning member including:
   a porous body;
   water; and
   a casing configured to accommodate the porous body and the water, in which
   a contact portion that adheres to a contacted body is provided on a surface of the casing.
(3) The partitioning member according to (1) or (2), in which
   a ratio of peel strength of the contact portion in the ON state of the adhesion to peel strength of the contact portion in the OFF state of the adhesion is 1.5 to 1000.
(4) The partitioning member according to any of (1) to (3), in which
   the adhesion of the contact portion is switched to the ON state by contact with water.
(5) The partitioning member according to any of (1) to (4), in which
   the adhesion of the contact portion is switched to the OFF state by drying.
(6) The partitioning member according to any of (1) to (5), in which
   the contact portion has peel strength of 0.001 N/10 mm to 1.0 N/10 mm.
(7) The partitioning member according to any of (1) to (6), in which
   the contact portion has peel strength of 0.001 N/10 mm or more and less than 0.010 N/10 mm.
(8) The partitioning member according to any of (1) to (7), in which
   the contact portion contains a water-soluble resin.
(9) The partitioning member according to any of (1) to (8), in which
   the contact portion is provided such that peel strength of the contact portion when the partitioning member is attached to a surface of the single cell is smaller than bending strength of the partitioning member.
(10) The partitioning member according to any of (1) to (9), in which
   the partitioning member includes the contact portion on one surface thereof.
(11) The partitioning member according to any of (1) to (10), in which
   the contact portion is a layer formed over at least 50% or more of an area of the surface of the partitioning member where the contact portion is provided.
(12) The partitioning member according to any of (1) to (10), in which
   the contact portion is a layer formed over at least 50% or more of an area of the surface of the partitioning member where the contact portion is provided, and a thickness of the layer is 0.1 µm to 20 µm.
(13) A battery assembly including:
   a plurality of single cells; and
   a plurality of the partitioning members according to any of (1) to (12) disposed between the single cells.
(14) A battery assembly including:
   single cells stacked and arranged with the partitioning member according to any of (1) to (12) interposed therebetween, the partitioning member being attached to a surface on one side of each of the single cells.
(15) A method for producing a battery assembly, including:
   a step of bringing the partitioning member according to any of (1) to (12) into contact with a surface of a single cell and attaching the partitioning member thereto; and
   a step of restraining a single cell group formed by stacking and arranging the partitioning member and the single cell and accommodating the single cell group in a housing that supports the single cell group.
(16) The method for producing a battery assembly according to (15), further including:
   a step of adjusting a position where the partitioning member is attached to the single cell.
(17) The method for producing a battery assembly according to (15) or (16), further including:
   a step of bringing moisture into contact with the contact portion of the partitioning member.
(18) A method of switching a contact state of the partitioning member according to (1) to (12) to the ON state to adhere the partitioning member to the surface of the single cell.
(19) A method of switching a contact state of the partitioning member according to (1) to (12) to the OFF state to detach the partitioning member from the surface of the single cell.

The present invention also includes the following aspects.
(1) A partitioning member for partitioning a plurality of single cells accommodated in a battery assembly, in which
   the partitioning member is provided with a contact portion to be in contact with the single cells on a surface thereof, and the partitioning member is attachable to and detachable from surfaces of the single cells via the contact portion.
(2) The partitioning member according to (1), in which
   the contact portion is switchable to an ON state in which adhesion appears and an OFF state in which the adhesion does not appear.
(3) The partitioning member according to (2), in which
   a ratio of peel strength of the contact portion in the ON state of the adhesion to peel strength of the contact portion in the OFF state of the adhesion is 1.5 to 1000.
(4) The partitioning member according to (2) or (3), in which
   the adhesion of the contact portion is switched to the ON state by contact with water.
(5) The partitioning member according to any of (2) to (4), in which
   the adhesion of the contact portion is switched to the OFF state by drying.
(6) The partitioning member according to any of (1) to (5), in which
   the contact portion has peel strength of 0.001 N/10 mm to 1.0 N/10 mm.
(7) The partitioning member according to any of (1) to (6), in which
   the contact portion has peel strength of 0.001 N/10 mm or more and less than 0.010 N/10 mm.
(8) The partitioning member according to any of (1) to (7), in which
   the contact portion contains a water-soluble resin.
(9) The partitioning member according to any of (1) to (8), in which
   the contact portion is provided such that peel strength of the contact portion when the partitioning member is attached to a surface of the single cell is smaller than bending strength of the partitioning member.
(10) The partitioning member according to any of (1) to (9), in which
   the partitioning member includes the contact portion on one surface thereof.
(11) The partitioning member according to any of (1) to (10), in which
   the contact portion is a layer formed over at least 50% or more of an area of the surface of the partitioning member where the contact portion is provided.
(12) The partitioning member according to (11), in which
   a thickness of the layer is 0.1 µm to 20 µm.
(13) A battery assembly including:
   a plurality of single cells; and
   a plurality of the partitioning members according to any of (1) to (12) disposed between the single cells.
(14) A battery assembly including:
   single cells stacked and arranged with the partitioning member according to any of (1) to (12) interposed therebetween, the partitioning member being attached to a surface on one side of each of the single cells.
(15) A method for producing a battery assembly, including:
   a step of bringing the partitioning member according to any of (1) to (12) into contact with a surface of a single cell and attaching the partitioning member thereto; and
   a step of restraining a single cell group formed by stacking and arranging the partitioning member and the single cell and accommodating the single cell group in a housing that supports the single cell group.
(16) The method for producing a battery assembly according to (15), further including:
   a step of adjusting a position where the partitioning member is attached to the single cell.
(17) The method for producing a battery assembly according to (15) or (16), further including:
   a step of bringing moisture into contact with the contact portion of the partitioning member.
(18) A method of switching a contact state of the partitioning member according to (1) to (12) to the ON state to adhere the partitioning member to the surface of the single cell.
(19) A method of switching a contact state of the partitioning member according to (1) to (12) to the OFF state to detach the partitioning member from the surface of the single cell.

As described above, an aspect of the present invention is the partitioning member whose surface is covered with the casing, the partitioning member includes the contact portion on the surface of the casing, and the contact portion can switch from the OFF state in which the adhesion is not exhibited to the ON state in which the adhesion is exhibited.

Another aspect of the present invention is the partitioning member including the porous body, a liquid, and the casing that accommodates the porous body and the liquid, and the partitioning member includes the contact portion that adheres to the non-contact body on the surface of the casing.

The partitioning member can partition the single cells of the plurality of single cells accommodated in the battery assembly in a stacked and arranged manner or the like, partition the single cell from a battery member other than the single cell, and partition battery members other than the single cell.

The partitioning member includes, on the surface thereof, the contact portion to be in contact with the single cell or the battery member other than the single cell, and is attachable to and detachable from the surface of the single cell via the contact portion.

The contact portion is located outside the casing relative to the porous body in the partitioning member.

Here, the expression "the partitioning member is attachable to and detachable from the surface of the single cell via the contact portion" means that the partitioning member can be attached to the surface of the single cell with the contact portion provided on the surface of the partitioning member interposed therebetween, and such an attached state can be maintained, and when an external force is applied to separate the partitioning member attached to the single cell from the single cell, the attached partitioning member can be detached from the single cell without deformation or alteration of surfaces where the single cell and the partitioning member are bonded and the entirety thereof, and furthermore, the detached partitioning member can be attached to the single cell again, and attachment and detachment operations relative to the single cell can be repeated.

Accordingly, when the partitioning member is stacked on the single cell, the partitioning member can be fixed to the surface of the single cell by bonding the contact portion provided on the surface of the partitioning member to the surface of the single cell, and the partitioning member can be removed from the single cell by applying a force between both members in a direction in which the partitioning member is separated from the single cell.

Since the partitioning member is attachable to and detachable from the single cell, when the partitioning member is attached to the single cell and the single cell and the partitioning member are arranged in a row to assemble the module including the single cell group, when positional misalignment between the single cell and the partitioning member is found, the partitioning member can be separated from the single cell whose position is once misaligned, and then the positional misalignment can be corrected by a simple operation of attaching the partitioning member to an appropriate position again. It is also possible to temporarily attach the partitioning member to the single cell via the contact portion before the partitioning member is attached to an appropriate position and fixed to the single cell.

Since the partitioning member can be attached to the single cell via the contact portion provided on the surface thereof, a plastic material such as a double-sided adhesive tape or a wrap film for bonding both members is not necessary, an operation of fixing the partitioning member to the single cell can be easily performed, and workability and efficiency of assembling the module and the battery assembly can be improved.

In the partitioning member having the above configuration, the contact portion can be formed using a material having a property switchable to the ON state in which the adhesion appears and the OFF state in which the adhesion does not appear.

Here, the expression "ON state in which the adhesion appears" refers to a state in which specific peel strength is exhibited when the partitioning member is attached to the battery such that the partitioning member can be attached to the battery, and the expression "OFF state in which the adhesion does not appear" refers to a state in which the adhesion is different from that in the ON state. The expression "switchable to the ON state in which the adhesion appears and the OFF state in which the adhesion does not appear" means that the ON state can be switched to the OFF state and the OFF state can be switched to the ON state through a specific operation.

The term "adhesion" refers to a state in which an interface between objects, that is, a surface is shared, and refers to contact, joining, and bonding between the contact portion and an adherend.

The contact portion may be formed such that the adhesion thereof is switched to the ON state by contact with water.

The contact portion may be formed such that the adhesion thereof is switched to the OFF state by drying.

The ratio of the peel strength of the contact portion in the ON state of the adhesion to that in the OFF state of the adhesion may be 1.5 to 1000.

The contact portion may have peel strength of 0.001 N/10 mm to 0.10 N/10 mm. Further, the contact portion may have peel strength of 0.001 N/10 mm or more and less than 0.010 N/10 mm.

The contact portion may be formed of a material containing a water-soluble resin.

The contact portion may be formed of a layer containing a water-soluble resin, and furthermore, a layer containing polyvinyl alcohol.

In this case, the water-soluble resin can exhibit adhesion by forming an interface with an adhered surface during a solidification process in water.

In the partitioning member having the above configuration, the contact portion may be provided such that the peel strength of the contact portion when the partitioning member is attached to the surface of the single cell is smaller than the bending strength of the partitioning member.

The contact portion may be provided on at least one surface of the partitioning member. Contact portions may be provided on both side surfaces of the partitioning member in contact with single cells on both left and right sides.

The contact portion may be formed into a layer formed over at least 50% or more of the area of the surface of the partitioning member where the contact portion is provided.

In this case, the thickness of the layer is preferably 0.1 µm to 20 µm, and more preferably 0.1 µm to 10 µm.

From the viewpoint of effectively switching thermal conductivity, when a surface average temperature of the partitioning member is 25°C, the thermal conductivity of the contact portion in a thickness direction is preferably 0.5 W/m·K or more, and thermal conductivity of the partitioning member is preferably less than 0.25 W/m·K.

When the surface average temperature of the partitioning member is 25°C, the thermal conductivity of the contact portion in the thickness direction is preferably 0.5 W/m·K or more, and thermal resistance per unit area of the partitioning member is preferably less than 3.0 × 10⁻³ K/W.

The "surface average temperature" means an average temperature of any three points in contact with a heat-generating body on a spacer surface.

The battery assembly according to the present invention includes a plurality of single cells and a plurality of partitioning members having the above configuration disposed between the single cells.

The battery assembly having the above configuration has a configuration in which single cells, in each of which the partitioning member having the above configuration is attached to a surface thereof on one side, are stacked and arranged with the partitioning members interposed therebetween.

The method for producing a battery assembly according to the present invention includes:
a step of bringing the partitioning member having the above configuration into contact with a surface of a single cell and attaching the partitioning member thereto, and
a step of restraining a single cell group formed by stacking and arranging the partitioning member and the single cell and accommodating the single cell group in a housing that supports the single cell group.

The production method also includes a step of adjusting a position where the partitioning member is attached to the single cell.

The production method also includes a step of attaching the partitioning member in contact with the single cell, then detaching the partitioning member therefrom and attaching the partitioning member thereto again.

The method also includes a step of bringing moisture into contact with the contact portion of the partitioning member before attaching to the single cell.

The method also includes a step of bringing moisture into contact with the contact portion of the partitioning member after attaching to the single cell.

A method for attaching the partitioning member includes switching the contact portion of the partitioning member to the ON state and adhering the contact portion to the surface of the single cell.

A method for detaching the partitioning member includes switching the contact portion of the partitioning member to the OFF state and detaching the contact portion from the surface of the single cell.

### Advantageous Effects of Invention

According to the partitioning member of the present invention, since the partitioning member is configured to be attachable to and detachable from the surface of the single cell via the contact portion, the partitioning member can be bonded and fixed to an appropriate position on the surface of the single cell and both members can be stacked and arranged, when positional misalignment occurs at a stacked position, the partitioning member can be once separated from the single cell, and then the separated partitioning member can be fixed to the appropriate position to correct the positional misalignment.

### Brief Description of Drawings

FIG. 1 shows a structure of an example of a partitioning member of the present invention, in which (A) is a schematic cross-sectional view and (B) is a cut-end view along B-B.
FIG. 2 shows a configuration of an example of a battery assembly of the present invention.
FIG. 3 includes a side view (A) and a top view (B) of a single cell used in the battery assembly in FIG. 2.
FIG. 4 shows a step of fixing the partitioning member to the single cell.
FIG. 5 shows a step of forming a module of a single cell group by stacking and arranging a plurality of single cells.

### Description of Embodiments

Hereinafter, preferred embodiments of a partitioning member and a battery assembly of the present invention will be described. However, the embodiments described below are examples for embodying the technical idea of the present invention, and the present invention is not limited to the embodiments described below.

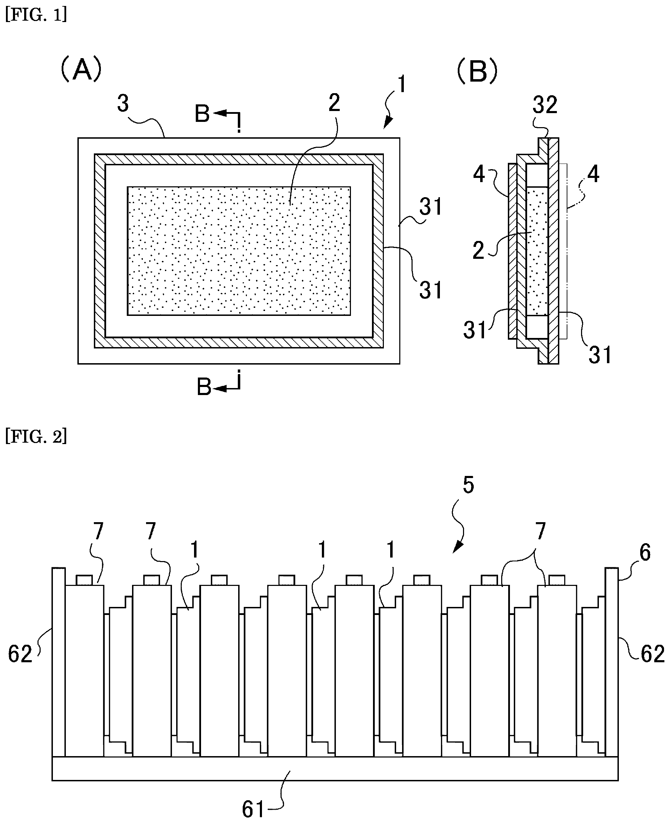

FIG. 1 shows a partitioning member of an embodiment of the present invention.

A shown partitioning member 1 is implemented by sealing a porous body 2 that can hold a liquid into a casing 3 together with the liquid.

Specifically, the partitioning member 1 has a configuration in which the casing 3 includes a sealing portion 32 formed by sealing edge portions of multilayer sheets 31, 31 each including a resin layer and a metal layer in a band-like manner, a contact portion 4 is provided on one surface of the casing 3, and the partitioning member 1 is attachable to and detachable from a surface of a single cell 7 to be described later via the contact portion 4. The porous body 2 and the liquid may be sealed in an internal space surrounded by the sealing portion 32.

### <Partitioning Member>

As shown in FIG. 1, the partitioning member 1 is formed in a flat plate-like shape or a sheet-like shape having an appropriate thickness. The partitioning member 1 is used to partition, in a thickness direction thereof, between single cells constituting the battery assembly or between a single cell constituting the battery assembly and a member other than the single cell, for example, a single cell and a wall surface of a housing that accommodates the partitioning member.

A partitioning member according to an aspect of the present invention may include a porous body, a liquid, and a casing that is a packaging material accommodating the porous body and the liquid. The porous body usually has low thermal conductivity. The porous body in the partitioning member is immersed in the liquid, and voids thereof are filled with the liquid, thereby increasing the thermal conductivity. Thus, thermal conductivity of the partitioning member can be higher than the thermal conductivity of the porous body.

The thermal conductivity of the partitioning member can be reduced by causing the liquid therein to disappear at a certain temperature.

From the viewpoint of increasing rate of change in the thermal conductivity, the porous body is preferably a heat insulation material.

### (Porous Body)

The porous body can hold the liquid and usually has elasticity.

The elastic porous body contracts or deforms in the thickness direction due to thermal expansion of the single cell. In the example shown in FIG. 1, the porous body 2 is formed in a flat plate-like shape or a sheet-like shape having a horizontally long rectangular shape. The porous body 2 is accommodated together with the liquid in the rectangular flat plate-like or sheet-like casing 3 larger than the porous body 2, and is sealed in the interior surrounded by the sealing portion 32 of the casing 3.

The porous body preferably contains a powdered inorganic material and a fibrous inorganic material. In the present invention, the "fibrous inorganic material" means an inorganic material having a shape whose long diameter is 100 times or more a short diameter, and the "powdered inorganic material" means an inorganic material having a shape whose long diameter is shorter than 100 times a short diameter. In particular, in the case of being fibrous, the "long diameter" means a fiber length, and the "short diameter" means a diameter of a cross-section orthogonal to the long diameter direction.

The fibrous inorganic material is preferably at least one selected from the group consisting of paper, a cotton sheet, a polyimide fiber, an aramid fiber, a polytetrafluoroethylene (PTFE) fiber, a glass fiber, rock wool, a ceramic fiber, and a bio-soluble inorganic fiber, and among these, at least one selected from the group consisting of a glass fiber, rock wool, a ceramic fiber, and a bio-soluble inorganic fiber is particularly preferable. A ceramic fiber is a fiber mainly containing silica and alumina (silica: alumina = 40:60 to 0:100), and specifically, a silica-alumina fiber, a mullite fiber, and an alumina fiber can be used.

The powdered inorganic material is preferably at least one selected from the group consisting of a silica particle, an alumina particle, a calcium silicate, a clay mineral, vermiculite, mica, cement, pearlite, fumed silica, and aerogel, and among these, at least one selected from the group consisting of a silica particle, an alumina particle, a calcium silicate, and vermiculite is particularly preferable. Among calcium silicates, xonotlite, tobermorite, wollastonite, and gyrolite are preferable, and gyrolite is particularly preferable. Gyrolite having a petal-like structure maintains a porous structure even when compressed and deformed, and thus has excellent liquid retention performance. Clay minerals mainly include magnesium silicate (including talc and sepiolite), montmorillonite, and kaolinite.

The porous body containing the fibrous inorganic material and the powdered inorganic material can be selected from known materials. For example, the porous body can be selected from those disclosed in JP2003-202099A.

A density of the porous body is preferably 0.20 g/cm³ to 1.10 g/cm³ from the viewpoint of having a low weight and excellent heat insulating performance even under a high temperature. When the density of the porous body is equal to or larger than the lower limit value, there are more air layers in an internal void, which is preferable from the viewpoint of heat insulating performance and liquid retention performance, and meanwhile, when the density is equal to or smaller than the upper limit value, the density is preferable from the viewpoint of having smaller deformation when compressed. From these viewpoints, the density of the porous body is preferably 0.35 g/cm³ or more, more preferably 0.55 g/cm³ or more, and meanwhile, is preferably 1.05 g/cm³ or less, more preferably 1.00 g/cm³ or less.

### (Liquid)

The liquid held by the porous body accommodated in the casing may be any liquid as long as the liquid is thermally conductive and can efficiently transfer heat generated from the single cell to an adjacent single cell. The liquid preferably has a boiling point of 80°C or higher and 250°C or lower at a normal pressure (1 atm), and more preferably has a boiling point of 100°C or higher and 150°C or lower at a normal pressure. As the liquid, water is particularly preferable from the viewpoint of having high vaporization heat and being generally available.

The liquid preferably contains at least one selected from the group consisting of water, alcohols, esters, ethers, ketones, hydrocarbons, fluorine-based compounds, and silicone-based oils. These may be used alone or a mixture of two or more thereof may be used.

Examples of alcohols that can be used as the liquid include alcohols containing 3 to 8 carbon atoms such as propanol, isopropanol, butanol, benzyl alcohol, and phenylethyl alcohol, and divalent or higher alcohols such as alkylene glycols like ethylene glycol and propylene glycol. These may be used alone or a mixture of two or more thereof may be used.

Examples of esters that can be used as the liquid include alkyl aliphatic carboxylic acid esters, alkyl carbonate diesters, alkyl oxalate diesters, and fatty acid esters of ethylene glycol. Examples of alkyl aliphatic carboxylic acid esters include lower alkyl formate esters such as methyl formate, n-butyl formate, and isobutyl formate, and lower alkyl aliphatic carboxylic acid esters such as lower alkyl acetate esters such as n-propyl acetate, isopropyl acetate, n-butyl acetate, and isobutyl acetate, and lower alkyl propionate esters such as ethyl propionate, n-propyl propionate, isopropyl propionate, n-butyl propionate, and isobutyl propionate. Examples of alkyl carbonate diesters include lower alkyl carbonate diesters such as dimethyl carbonate, diethyl carbonate, dibutyl carbonate, and methyl ethyl carbonate. Examples of alkyl oxalate diesters include lower alkyl oxalate diesters such as dimethyl oxalate and diethyl oxalate. An example of a fatty acid ester of ethylene glycol is ethylene glycol acetate ester. These may be used alone or a mixture of two or more thereof may be used.

Examples of ethers that can be used as the liquid include n-butyl ether, n-propyl ether, and isoamyl ether. These may be used alone or a mixture of two or more thereof may be used.

Examples of ketones that can be used as the liquid include ethyl methyl ketone and diethyl ketone. These may be used alone or a mixture of two or more thereof may be used.

Examples of hydrocarbons that can be used as the liquid include heptane, octane, nonane, decane, toluene, and xylene. These may be used alone or a mixture of two or more thereof may be used.

Examples of fluorine-based compounds that can be used as the liquid include refrigerants 1,1,2,2,3,3,4-heptafluorocyclopentane(HFC-c447ef) and 1,1,1,2,2,3,3,4,4,5,5,6,6-tridecafluorooctane(HFC-76-13sf). These may be used alone or a mixture of two or more thereof may be used.

Examples of silicone-based oils that can be used as the liquid include modified silicone oils such as methyl polysiloxane, methylphenyl polysiloxane, cyclic methyl siloxane, and silicone polyether copolymers. These may be used alone or a mixture of two or more thereof may be used.

The liquid may contain an antifreeze agent, a preservative, and a pH adjuster. These may be used alone or a mixture of two or more thereof may be used. The liquid may contain an additive such as a substance that imparts antifreeze properties (antifreeze agent), a preservative, or a pH adjuster. What is contained in the liquid is not limited thereto, and may be added as necessary.

### (Casing)

As shown in FIG. 1, the casing 3 accommodates the porous body 2 that holds the liquid in the sealed internal space surrounded by the sealing portion 32 formed by sealing peripheral edge portions of two laminated sheets 31, 31, which face each other and each have a planar rectangular shape, in a band-like manner.

The casing has flexibility and is deformable according to expansion of the single cell. The casing can return to an original state when the single cell contracts. As the casing, for example, a resin sheet or a resin film can be applied. For example, the porous body is interposed between two opposingly positioned resin sheets or resin films or a resin sheet or resin film folded in half, and a peripheral edge portion of the casing where the two resin sheets or resin films are in contact is sealed by a sealing method such as fusion or thermal bonding, thereby sealing the porous body impregnated with the liquid.

As the casing, for example, a resin casing or a metal casing can be used. A laminate of a metal foil and a resin is preferable from the viewpoint of having high heat resistance and strength. The laminate of a metal and a resin is preferably a laminate or a multilayer sheet of three or more layers including a protective resin layer, a metal layer, and a sealant resin layer. On the other hand, a laminate of resin films is preferable since flexibility is provided and a moisture absorption effect of an encapsulating material is not interfered with. The laminate of resin films is preferably a laminate or a multilayer sheet of two or more layers, such as a combination of a protective resin layer and a sealant resin layer or a combination of a barrier protective resin layer having barrier properties obtained by evaporating aluminum or silicon dioxide on a protective resin layer and a sealant resin layer.

Examples of the metal used as the metal foil and the metal layer include aluminum, copper, tin, nickel, stainless steel, lead, a tin-lead alloy, bronze, silver, iridium, and phosphor bronze. In particular, aluminum, copper, and nickel are preferable, and aluminum is more preferable.

The protective resin layer is not particularly limited, and examples thereof include polyolefin resins such as homopolymers and copolymers of ethylene, propylene, and butene, amorphous polyolefin resins such as cyclic polyolefins, polyester resins such as polyethylene terephthalate (PET) and polyethylene naphthalate (PEN), polyamide resins such as nylon 6, nylon 66, nylon 12, and copolymerized nylon, partially hydrolyzed ethylene-vinyl acetate copolymers (EVOH), polyimide resins, polyetherimide resins, polysulfone resins, polyethersulfone resins, polyetherketone resins, polycarbonate resins, polyvinyl butyral resins, polyarylate resins, fluororesins, acrylic resins, and biodegradable resins. Among these, polyamide resins such as nylon 6 and polyester resins such as polyethylene terephthalate are preferable from the viewpoint of imparting heat resistance and mechanical strength as the casing. The protective resin layer may be a single layer, or two or more layers may be laminated. In the case of two or more layers, the layers may be selected from different resin layers or the same resin layer.

At least one of a thermosetting resin and a thermoplastic resin can be used for the sealant resin layer, and a thermoplastic resin is particularly preferable. Examples of the sealant resin layer include polyolefin resins such as homopolymers and copolymers of ethylene, propylene, and butene, amorphous polyolefin resins such as cyclic polyolefins, polyester resins such as polyethylene terephthalate (PET) and polyethylene naphthalate (PEN), polyvinyl butyral resins, acrylic resins, and biodegradable resins. Among these, at least one selected from the group consisting of polyolefin resins such as high-pressure low-density polyethylene (LDPE), linear low-density polyethylene (LLPDE), and polypropylene resin is preferable from the viewpoint of melting properties at a low temperature for obtaining a function of releasing the liquid inside the casing to the outside during abnormal heat generation. Further, from the viewpoint of long-term storage stability within a temperature range usually used as the partitioning member in the battery assembly and from the viewpoint of versatility, a polypropylene resin is more preferable, and a non-stretched polypropylene resin is particularly preferable.

A thickness of the protective resin layer is not particularly limited, and is preferably 5 µm or more, more preferably 10 µm or more, and still more preferably 15 µm or more from the viewpoint of imparting mechanical strength. In order to ensure flexibility, the thickness is preferably 100 µm or less, more preferably 50 µm or less, and still more preferably 30 µm or less.

A thickness of the metal layer is not particularly limited, and is preferably 5 µm or more, more preferably 8 µm or more, and still more preferably 12 µm or more from the viewpoint of ensuring moisture permeability and preventing generation of pinholes, and is preferably 50 µm or less, more preferably 35 µm or less, and still more preferably 20 µm or less from the viewpoint of ensuring flexibility.

A thickness of the sealant resin layer is not particularly limited, and is preferably 10 µm or more, more preferably 20 µm or more, and still more preferably 30 µm or more from the viewpoint of ensuring sealing properties. In order to ensure flexibility, the thickness is preferably 120 µm or less, more preferably 100 µm or less, and still more preferably 80 µm or less.

A thickness of the casing is not particularly limited, and is preferably 30 µm or more, more preferably 45 µm or more, and still more preferably 65 µm or more from the viewpoint of mechanical strength in consideration of the thickness of each of the above-described layers. In order to ensure flexibility, the thickness is preferably 280 µm or less, more preferably 210 µm or less, and still more preferably 150 µm or less.

The casing seals the liquid and the porous body in the casing by bonding peripheral edge portions of two casings in an annular manner by a sealing method such as fusion or thermal bonding. Alternatively, the liquid and the porous body may be sealed by folding one casing and bonding peripheral edge portions by the above-described sealing method. The casing is preferably flexible, that is, elastic, but may not be flexible.

An internal air pressure of the casing is preferably lower than an external air pressure from the viewpoint of sufficiently increasing a temperature at the time of hole formation. Therefore, it is particularly preferable to perform vacuum sealing when sealing the casing. It is also possible to control the temperature at the time of hole formation by adjusting the internal air pressure.

### (Contact Portion)

As shown in FIG. 1, the contact portion 4 is provided on a surface of the casing 3 on a side surface on one side of the partitioning member 1 formed in a flat plate-like shape or a sheet-like shape, and the partitioning member 1 can be attached to and detached from the surface of the single cell via the contact portion 4 on a surface of the battery assembly.

The contact portion 4 can be formed using a material that exhibits more adhesion by contact with water, such as a water-soluble resin.

Such a material is not adhesive in a dry state, and preferably has a function of exhibiting adhesion by dissolving or swelling the water-soluble resin again by addition of moisture.

The contact portion 4 may be formed of a material having peel strength of 0.001 N/10 mm to 0.1 N/10 mm measured according to JIS Z 0237 when the material is allowed to stand for 5 minutes or longer in a state in which water is brought into contact and then a load is applied such that an adherend and the contact portion come into contact with each other.

The peel strength is preferably peel strength with respect to any adherend, and more preferably peel strength with respect to a surface of a casing of the single cell.

Peel strength in an ON state is preferably 0.01 N/10 mm to 0.8 N/10 mm, and more preferably 0.01 N/10 mm to 0.5 N/10 mm from the viewpoint of easy positioning due to lack of adhesion to the adherend.

Peel strength in an OFF state can be obtained by performing the measurement in a case where the adherend and the contact portion are not in contact with each other and are dried for 3 days or longer in an environment of 23°C and a dew point of -80°C. From the viewpoint of preventing blocking between films when the films are transported, the peel strength is preferably 0.001 N/10 mm or more and less than 0.01 N/10 mm.

The contact portion 4 may be formed of a material containing a water-soluble resin.

The water-soluble resin is not particularly limited as long as the water-soluble resin has a function as a re-hydratable adhesive, and examples thereof that can be used include various starches such as oxidized starch and etherified starch, animal glue, Arabic gum, tragacanth gum, dextrin, polyvinyl ethers such as polyvinyl alcohol, vinyl acetate resin, polyvinyl methyl ether, polyvinyl ethyl ether, and polyvinyl isobutyl ether, polyvinylpyrrolidone, cellulose derivatives such as methylcellulose, carboxymethylcellulose, hydroxyethylcellulose, ethylhydroxyethylcellulose, and viscose, polyethylene glycol, polyethylene oxide, casein, gelatin, and sodium alginate. Among these, polyvinyl alcohol is particularly preferable from the viewpoint of adhesiveness.

A saponification degree (measured according to JIS K 6726: 1994) of a polyvinyl alcohol resin used in the present invention is generally 60 mol% to 100 mol%. From the viewpoint of improving adhesion, the saponification degree is preferably 80 mol% to 99 mol%, and more preferably 80 mol% to 90 mol%. When the saponification degree is low or high, water solubility tends to decrease and adhesion strength tends to decrease.

The polyvinyl alcohol resin used in the present invention generally has an average polymerization degree (measured according to JIS K 6726: 1994) of 100 to 4000. From the viewpoint of improving adhesion, the average polymerization degree is preferably 200 to 3000, more preferably 300 to 2800, and still more preferably 500 to 2500. When the average polymerization degree is excessively small, the adhesion strength tends to decrease, and when the average polymerization degree is excessively large, viscosity of an aqueous solution during film formation increases and productivity tends to decrease.

A polymerization degree of the polyvinyl alcohol resin can be generally represented by water-soluble viscosity, and viscosity of a 4 weight% aqueous solution of the polyvinyl alcohol resin of the present invention at 20°C is preferably 3 mPa·s to 70 mPa·s, more preferably 5 mPa·s to 60 mPa·s, and particularly preferably 10 mPa·s to 50 mPa·s from the viewpoint of improving adhesion. When the viscosity is excessively small, the adhesion strength tends to decrease, and when the viscosity is excessively large, the viscosity of the aqueous solution during film formation increases and the productivity tends to decrease.

When the polyvinyl alcohol resin is a modified polyvinyl alcohol resin, a modification ratio in the modified polyvinyl alcohol resin, that is, a content of a structural unit derived from various monomers in a copolymer or a content of a functional group introduced by a post-reaction, is generally 0.1 mol% to 20 mol%, although the modification ratio cannot be generalized since characteristics greatly differ depending on a type of the functional group.

Using the above material, the contact portion 4 can be provided with adhesion that can fix the partitioning member to the surface of the single cell.

In the present invention, a filler or the like may be further contained as necessary.

The filler is preferably contained in view of blocking resistance, specific examples thereof include an inorganic filler and an organic filler, and among these, the organic filler is preferable. An average particle diameter is preferably 0.1 µm to 20 µm, more preferably 0.5 µm to 15 µm. The average particle diameter can be measured by, for example, a laser diffraction type particle size distribution analyzer.

From the viewpoint of improving a blocking effect, the inorganic filler preferably has an average particle diameter of 1 µm to 10 µm. When the average particle diameter is excessively small, the blocking resistance effect tends to be difficult to obtain, and when the average particle diameter is excessively large, a pinhole tends to be formed when a water-soluble film is stretched during forming and processing, or appearance tends to be deteriorated.

Specific examples of the inorganic filler include talc, clay, silicon dioxide, diatomaceous earth, kaolin, mica, asbestos, gypsum, graphite, glass balloons, glass beads, calcium sulfate, barium sulfate, ammonium sulfate, calcium sulfite, calcium carbonate, whisker-like calcium carbonate, magnesium carbonate, dawsonite, dolomite, potassium titanate, carbon black, glass fiber, alumina fiber, boron fiber, processed mineral fiber, carbon fiber, hollow carbon spheres, bentonite, montmorillonite, copper powder, sodium sulfate, potassium sulfate, zinc sulfate, copper sulfate, iron sulfate, magnesium sulfate, aluminum sulfate, potassium aluminum sulfate, ammonium nitrate, sodium nitrate, potassium nitrate, aluminum nitrate, ammonium chloride, sodium chloride, potassium chloride, magnesium chloride, calcium chloride, sodium phosphate, and potassium chromate. These may be used alone or two or more thereof may be used in combination.

From the viewpoint of improving the blocking effect, the organic filler preferably has an average particle diameter of 0.5 µm to 20 µm, more preferably 0.5 µm to 10 µm, particularly preferably 0.5 µm to 7 µm, and especially preferably 0.5 µm to 5 µm. When the average particle diameter is excessively small, the blocking resistance effect tends to be difficult to obtain, and when the average particle diameter is excessively large, a pinhole tends to be formed when a water-soluble film is stretched during forming and processing.

Examples of the organic filler include biodegradable resins such as polylactic acid in addition to starch, melamine resins, polymethyl(meth)acrylate resins, and polystyrene resins. Among these, it is particularly preferable to use a polymethyl(meth)acrylate resin, a polystyrene resin, or a biodegradable resin such as starch as the organic filler. These may be used alone or two or more thereof may be used in combination.

Specific examples of the starch include raw starch (such as corn starch, potato starch, sweet potato starch, wheat starch, cassava starch, sago starch, tapioca starch, sorghum starch, rice starch, bean starch, kudzu starch, bracken starch, lotus root starch, and water chestnut starch), physically modified starch (such as α-starch, fractionated amylose, and wet heat-treated starch), enzymatically modified starch (such as hydrolyzed dextrin, enzymatically degraded dextrin, and amylose), chemically decomposed modified starch (such as acid-treated starch, hypochlorous acid oxidized starch, and dialdehyde starch), and chemically modified starch derivatives (such as esterified starch, etherified starch, cationized starch, and cross-linked starch). Among these, raw starch, particularly corn starch and rice starch are preferably used in terms of availability and economy. These may be used alone or two or more thereof may be used in combination.

From the viewpoint of improving the blocking effect, a content of the filler, if contained, is preferably 1 to 30 parts by mass, more preferably 2 to 25 parts by mass, and particularly preferably 2.5 to 20 parts by mass with respect to 100 parts by mass of the polyvinyl alcohol resin. When the content is excessively low, the blocking resistance tends to decrease, and when the content is excessively high, a pinhole tends to be formed when a water-soluble film is stretched during forming and processing.

The peel strength of the contact portion 4 is preferably smaller than bending strength of the partitioning member. The peel strength can be measured by a method described in JIS K 6854.

When the peel strength of the contact portion 4 is smaller than the bending strength of the partitioning member, the partitioning member can be separated from the single cell without being deformed.

As shown in FIG. 1, the contact portion 4 may be provided on a surface of the laminated sheet 31 on a side surface on one side of the partitioning member 1, or may be provided on the surface of the casing 31 on both left and right sides of the partitioning member 1.

The contact portion 4 may be a layer formed over at least 50% or more of an area of the surface of the laminated sheet 31 where the contact portion of the partitioning member 1 is provided.

When the layer is formed over 50% or more of the area, uneven adhesion to the adherend due to bending of a film having the contact portion can be alleviated, which is preferable from the viewpoint of ensuring sufficient adhesive strength.

A thickness of the layer forming the contact portion 4 is preferably 0.1 µm to 20 µm, more preferably 0.5 µm to 15 µm, and still more preferably 1.0 µm to 10 µm.

The thickness of the layer is preferably equal to or larger than the lower limit value from the viewpoint of preventing blocking between films when the films are transported, and is preferably equal to or smaller than the upper limit value from the viewpoint of ensuring sufficient adhesion to the adherend. When the thickness is out of this range, coating loss or uneven thickness may be caused at the contact portion.

The partitioning member 1 having the above configuration is formed by sealing the peripheral edge portions of the two planar rectangular casings (laminated sheets) 31, 31, which have the contact portion 4 and face each other, in a band-like manner. The porous body 2 holding the liquid can be sealed in the sealed internal space surrounded by the sealing portion 32.

Alternatively, the contact portion 4 may be provided after peripheral edge portions of casings, which do not include the contact portion 4, are sealed in a band-like manner.

According to the partitioning member 1 having such a configuration, when the partitioning member 1 is stacked on the single cell, the partitioning member 1 can be fixed to the surface of the single cell by bonding the contact portion 4 provided on the surface of the partitioning member 1 to the surface of the single cell, and the partitioning member 1 can be removed from the single cell by applying a force between both members in a direction in which the partitioning member 1 is separated from the single cell.

Since the partitioning member 1 is attachable to and detachable from the single cell, when a module including a single cell group is assembled, when positional misalignment between the single cell and the partitioning member 1 is found, the partitioning member 1 can be separated from the single cell whose position is once misaligned, then the positional misalignment can be corrected by a simple operation of attaching the partitioning member 1 to an appropriate position again, and thus workability and efficiency of assembling the module and the battery assembly can be improved.

In the partitioning member 1 attached to the single cell, an internal pressure of the partitioning member 1 rises upon receiving heat generated from the single cell, the partitioning member 1 is opened accordingly, and the liquid therein is ejected to the outside, and therefore, thermal resistance of the porous body 2 sealed in the partitioning member 1 is switched to exhibit high thermal resistance, and accordingly, it is possible to cool the single cell which is in contact with the partitioning member 1 and where an abnormal temperature rise occurs and to simultaneously reduce heat conduction to an adjacent single cell.

### <Battery Assembly>

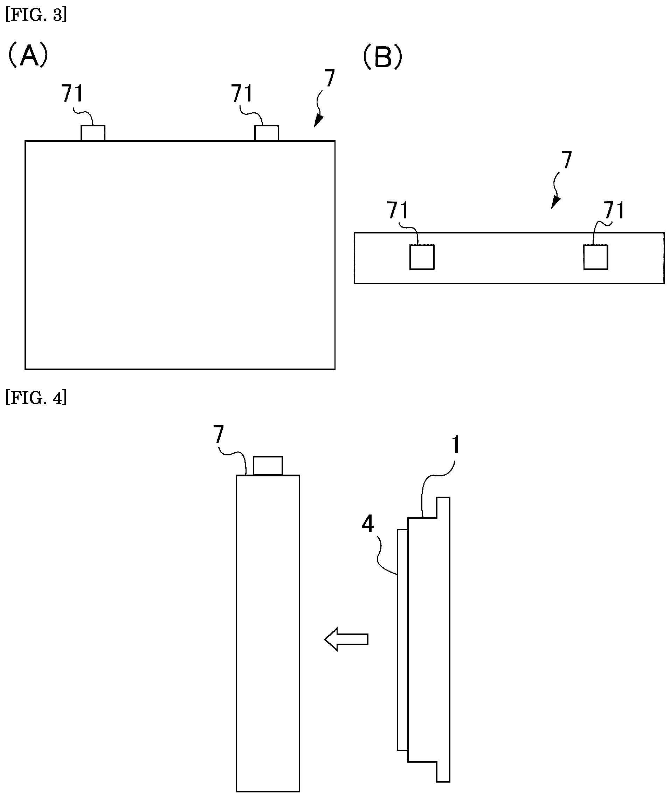

FIG. 2 shows an example of a configuration of a battery assembly in which single cells are partitioned by the partitioning member 1 having the above configuration, and FIG. 3 shows an example of a configuration of each single cell constituting the battery assembly.

The single cell 7 used in the battery assembly 6 is generally a single cell called a prismatic cell or a pouch cell, which has a rectangular parallelepiped shape having an appropriate thickness, an appropriate width, and an appropriate height, and is provided with electrode terminals 71, 71 on an upper surface or a side surface thereof.

The single cell 7 is, for example, a lithium-ion secondary battery including a positive electrode and a negative electrode, which can absorb and release lithium ions, and an electrolyte. In addition to the lithium-ion secondary battery, secondary batteries such as an all-solid-state lithium-ion battery, a lithium polymer battery, a lithium metal battery, a lithium-sulfur battery, a lithium-air battery, an all-resin battery, a sodium-sulfur battery, a nickel-metal hydride battery, a nickel-cadmium battery, and a lead-acid battery can be applied.

In the battery assembly 6, a plurality of single cells 7 are stacked, arranged, and accommodated in a housing 6 that includes a bottom wall 61, four side walls 62, and a lid member (not shown). The single cells 7 are partitioned by disposing the partitioning member 1 having the above-described configuration, and the adjacent single cells 7 are partitioned in the thickness direction of the partitioning member 1. The positive and negative electrode terminals 71, 71 of the adjacent single cells 7 are electrically connected by a bus bar (not shown) in series or in parallel or in a combination of series and parallel such that the battery assembly 5 outputs predetermined electric power.

A larger battery assembly can also be implemented by electrically connecting a plurality of battery assemblies in series or in parallel, or in a combination of series and parallel. In this case, in the large battery assembly, a partitioning member having the same configuration as that of the partitioning member 1 may be disposed between the battery assemblies inside.

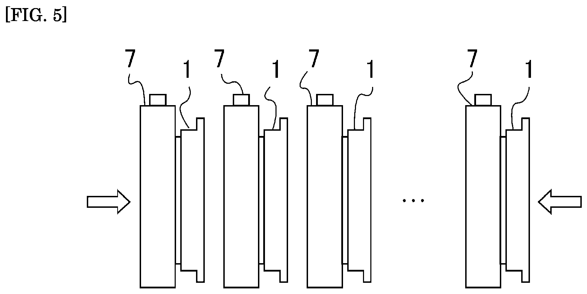

As shown in FIG. 4, the battery assembly 6 can be produced through a step of bringing the partitioning member 1 into contact with the surface of the single cell 7 via the contact portion 4 and attaching the partitioning member 1 thereto, a step of stacking and arranging the single cells 7 to each of which the partitioning member 1 is attached with the partitioning member 1 interposed therebetween as shown in FIG. 5, and a step of restraining a stacked and arranged single cell group and accommodating the single cell group in the housing 6 that supports the single cell group.

A production process may include a step of adjusting a position where the partitioning member 1 is attached to the single cell 7, a step of bringing moisture into contact with a layer containing a water-soluble resin, when the contact portion 4 of the partitioning member 6 is provided with such a layer, to cause adhesion to appear, or a step of attaching the partitioning member 1 to the single cell 7.

It is preferable that the partitioning member 1 is outside the single cell 7 and accommodated inside the battery assembly 6, and at this time, an area ratio of the partitioning member 1 to an area of a contact surface of an adjacent single cell 7 with the partitioning member 1 (an area of the partitioning member/an area of the contact surface of the single cell with the partitioning member) is preferably 0.5 to 1.1, more preferably 0.8 to 1.05, and particularly preferably 0.9 to 1.0. When being within such a range, there is a tendency that heat transfer between single cells is promoted at a room temperature, a temperature of a sealed portion is increased to a higher level and the sealed portion is easily ruptured when the single cells abnormally generate heat, a larger internal pressure is applied to rupture the sealed portion when the single cells abnormally generate heat, and the single cells are insulated from heat more satisfactorily when the single cells abnormally generate heat.

In order to increase the temperature of the sealed portion when the single cell abnormally generates heat and easily cause a rupture, it is desirable that a width of the sealed portion is set such that the sealed portion of the partitioning member overlaps the contact surface of the adjacent single cell with the partitioning member, and that the inside of an inner edge of the sealed portion is entirely located inside the contact surface of the adjacent single cell with the partitioning member.

The battery assembly is applied to, for example, a battery assembly mounted in an electric vehicle (EV), a hybrid electric vehicle (HEV), a plug-in hybrid electric motor vehicle (PHEV), electric heavy machinery, an electric motorcycle, an electric assist bicycle, a ship, an aircraft, an electric train, an uninterruptible power supply (UPS), a home energy storage system, and a power system stabilization battery system using renewable energy such as wind power/solar power/tidal power/geothermal power. The battery assembly can also be used as a power source that supplies electric power to devices other than the above-described EV and the like.

### [Examples]

A preferred form of the contact portion in the partitioning member of the present invention will be described in detail based on examples. The present invention is not limited to these Examples.

### (Preparation of Sample)

A partitioning member of a sample was produced using a casing made of an aluminum laminate film (having a total thickness of 67 µm including a biaxially stretched polyethylene terephthalate film having a thickness of 15 µm as a protective resin layer (outside), an aluminum layer having a thickness of 12 µm as a metal layer, a linear low-density polyethylene (LLDPE) film having a thickness of 30 µm as a sealant resin layer (inside), and polyurethane adhesive layers each having a thickness of 5 µm between the layers).

A peripheral dimension of the partitioning member of the sample was 145 mm × 90 mm, a size of an encapsulated body (vermiculite sheet; thickness: 1 mm) made of porous sheets sealed therein was 112 mm × 58 mm, and the encapsulated body was formed by stacking five sheets and sealing a slight amount of water therein such that a thickness of a portion where an internal space was disposed was 5 mm and a weight of the entire sample was 20 g.

On the partitioning member of the sample produced under the above conditions, a test was performed to determine a degree of adhesion when the partitioning member was attached to a surface of a single cell.

In the test, water was applied to one side surface of the partitioning member as uniformly as possible with a sponge, a side where the water was applied was pressed against an aluminum plate regarded as the single cell, followed by inversion by 180° (with the pressed surface facing upward and the partitioning member facing downward), and a time required for dropping was measured to evaluate the adhesion. A amount of the water applied by the sponge was 10 mg.

### (Example 1)

An aqueous solution of polyvinyl alcohol (product name: GOHSENOL GH-17R, manufactured by Mitsubishi Chemical Corporation) was applied to a surface on one side of the partitioning member of the sample prepared above and dried in a dryer at 80°C for 5 minutes to form a contact portion formed of an adhesion layer having a thickness of 1 µm.

On the partitioning member, 10 mg of water was applied to the contact portion and the test was performed. Results are shown in Table 1.

### (Example 2)

A partitioning member was produced under the same conditions as in Example 1 except that the thickness of the adhesion layer was 3 µm, and the same test was performed. Results are shown in Table 1.

### (Example 3)

A partitioning member was produced under the same conditions as in Example 1 except that the thickness of the adhesion layer was 0.5 µm, and the same test was performed. Results are shown in Table 1.

### (Example 4)

A partitioning member was prepared under the same conditions as in Example 1 except that the thickness of the adhesion layer was 1 µm, and the same test was performed by applying 5 mg of water to the contact portion. Results are shown in Table 1.

**[Table 1]**

| | Thickness of adhesion layer (µm) | Amount of applied water (mg) | Adhesion time (N = 3 average) |
|---|---|---|---|
| Example 1 | 1 | 10 | One day or longer |
| Example 2 | 3 | 10 | One day or longer |
| Example 3 | 0.5 | 10 | One hour |
| Example 4 | 1 | 5 | One day or longer |

According to the above test results, it was confirmed that adhesion can be controlled by adjusting the layer thickness of the contact portion and the amount of contacted water. The adhesion of each adhesion layer of the partitioning members of the above Examples changed from an ON state to an OFF state.

The configurations of the partitioning member and the battery assembly of the present invention described above are examples, and can be appropriately modified based on design requirements or the like without departing from the gist of the present invention.

In the present description, when expressed as "X to Y" (X and Y are any numbers), meaning of "X or more and Y or less" and meaning of "preferably larger than X" and "preferably smaller than Y" are included unless otherwise specified.

Further, when expressed as "X or more" (X is any number), meaning of "preferably more than X" is included unless otherwise specified, and when expressed as "Y or less" (Y is any number), meaning of "preferably less than Y" is included unless otherwise specified.

### Reference Signs List

1 partitioning member
2 porous body
3 casing
31 multilayer sheet
32 sealing portion
4 contact portion
5 battery assembly
6 housing
61 bottom wall portion
62 side wall portion
7 single cell
71 electrode terminal

## Claims

1. A partitioning member, wherein
a surface of the partitioning member is covered with a casing, and the casing includes, on a surface thereof, a contact portion to be in contact with the single cell, and
the contact portion is switchable to an ON state in which adhesion appears and an OFF state in which the adhesion does not appear.

2. A partitioning member comprising:
a porous body;
water; and
a casing configured to accommodate the porous body and the water, wherein
a contact portion that adheres to a contacted body is provided on a surface of the casing.

3. The partitioning member according to claim 1 or 2, wherein
a ratio of peel strength of the contact portion in the ON state of the adhesion to peel strength of the contact portion in the OFF state of the adhesion is 1.5 to 1000.

4. The partitioning member according to claim 1 or 2, wherein
the adhesion of the contact portion is switched to the ON state by contact with water.

5. The partitioning member according to claim 1 or 2, wherein
the adhesion of the contact portion is switched to the OFF state by drying.

6. The partitioning member according to claim 1 or 2, wherein
the contact portion has peel strength of 0.001 N/10 mm to 1.0 N/10 mm.

7. The partitioning member according to claim 1 or 2, wherein
the contact portion contains a water-soluble resin.

8. The partitioning member according to claim 1 or 2, wherein
the contact portion is provided such that peel strength of the contact portion when the partitioning member is attached to a surface of the single cell is smaller than bending strength of the partitioning member.

9. The partitioning member according to claim 1 or 2, wherein
the partitioning member includes the contact portion on one surface thereof.

10. The partitioning member according to claim 1 or 2, wherein
the contact portion is a layer formed over at least 50% or more of an area of the surface of the partitioning member where the contact portion is provided.

11. The partitioning member according to claim 1 or 2, wherein
the contact portion is a layer formed over at least 50% or more of an area of the surface of the partitioning member where the contact portion is provided, and a thickness of the layer is 0.1 µm to 20 µm.

12. A battery assembly comprising:
a plurality of single cells; and
a plurality of the partitioning members according to any one of claims 1 to 11 disposed between the single cells.

13. A battery assembly comprising:
single cells stacked and arranged with the partitioning member according to any one of claims 1 to 11 interposed therebetween, the partitioning member being attached to a surface on one side of each of the single cells.

14. A method for producing a battery assembly, comprising:
a step of bringing the partitioning member according to any one of claims 1 to 11 into contact with a surface of a single cell and attaching the partitioning member thereto; and
a step of restraining a single cell group formed by stacking and arranging the partitioning member and the single cell and accommodating the single cell group in a housing that supports the single cell group.

15. The method for producing a battery assembly according to claim 14, further comprising:
a step of bringing moisture into contact with the contact portion of the partitioning member.
